# EUROPÄISCHE PATENTSCHRIFT

(11) **EP 0 925 473 B1**
(45) Veröffentlichungstag und Bekanntmachung des Hinweises auf die Patenterteilung: **21.05.2003**
(21) Anmeldenummer: 97938784.2
(22) Anmeldetag: 19.08.1997
(51) Int. Cl.: F23N 5/16, F23R 3/28, F23R 3/34

(54) **VERFAHREN UND VORRICHTUNG ZUR AKUSTISCHEN MODULATION EINER VON EINEM HYBRIDBRENNER ERZEUGTEN FLAMME**
METHOD AND DEVICE FOR ACOUSTIC MODULATION OF A FLAME PRODUCED BY A HYBRID BURNER
PROCEDE ET DISPOSITIF POUR LA MODULATION ACOUSTIQUE D'UNE FLAMME PRODUITE PAR UN BRULEUR HYBRIDE

(30) Priorität: 05.09.1996 DE 19636093
(43) Veröffentlichungstag der Anmeldung: 30.06.1999
(73) Patentinhaber: SIEMENS AKTIENGESELLSCHAFT, 80333 München (DE)
(72) Erfinder: SEUME, Jörg, D-14193 Berlin (DE); VORTMEYER, Nicolas, D-45130 Essen (DE); GLEIS, Stephan, D-83071 Stephanskirchen (DE); HERMANN, Jakob, D-82282 Oberweikertshofen (DE); VORTMEYER, Dieter, D-80683 München (DE)
(86) Internationale Anmeldenummer: DE9701789
(87) Internationale Veröffentlichungsnummer: WO98010226

(56) Entgegenhaltungen:
- EP-A- 0 601 608
- DE-A- 4 040 745
- DE-A- 4 339 094
- GB-A- 2 306 216
- US-A- 5 428 951
- LANGHORNE P.J. ET AL: 'Practical active control systems for combustion oscillations' JOURNAL OF PROPULSION AND POWER Bd. 6, Nr. 13, 1990, Seiten 324 - 333

## Beschreibung

Die Erfindung betrifft ein Verfahren zur akustischen Modulation einer von einem Hybridbrenner umfassend einen Vormischbrenner und einen diesem zugehörigen Pilotbrenner durch Verbrennung eines dem Vormischbrenner in einem Hauptstrom sowie dem Pilotbrenner in einem Pilotstrom zugeführten Brennstoffes erzeugten Flamme mittels akustisch moduliertem Zuführen des Brennstoffes, sowie eine entsprechende Vorrichtung.

Die Erfindung bezieht sich insbesondere auf ein solches Verfahren und eine solche Vorrichtung, die Einsatz finden in einer Gasturbine, um die in der Gasturbine von dem Hybridbrenner bewirkte Verbrennung zu beeinflussen, wobei diese Beeinflussung insbesondere geschieht, um Verbrennungsschwingungen in der Gasturbine zu unterdrücken.

Unter Verbrennungsschwingungen werden allgemein akustische Schwingungen verstanden, die in einem Verbrennungssystem, welches zu akustischen Schwingungen fähig ist, von der Verbrennung selbst angeregt werden. Verbrennungsschwingungen sind wohl zu unterscheiden von einem in jedweder Verbrennungsanlage beobachtbaren akustischen Rauschen; es gibt kaum eine im technischen Maßstab relevante Flamme, von welcher kein deutlich wahrnehmbares Rauschen ausgeht. Im Gegensatz zu dem Rauschen, welches naturgemäß akustische Signale mit Frequenzen aus einer vergleichsweise großen Bandbreite enthält, ist eine Verbrennungsschwingung gekennzeichnet durch ein sehr begrenztes Frequenzspektrum. In einem Verbrennungssystem in einer Gasturbine hat eine Verbrennungsschwingung üblicherweise eine Frequenz zwischen etwa 10 Hz und einigen kHz. Da ein Verbrennungssystem in einer industriellen Anlage vielfach sehr kompliziert gestaltet ist, ist es praktisch nicht möglich, Verbrennungsschwingungen hinsichtlich ihres Auftretens und hinsichtlich ihrer Frequenzen vorherzusagen; im Regelfall scheitert dies bereits daran, daß es unmöglich ist, die Grenzen desjenigen schwingungsfähigen Gebildes, welches die Frequens der Schwingungen bestimmt, zu erkennen. Dementsprechend sind die einschlägig bewanderten und tätigen Personen bei der Vermeidung von Verbrennungsschwingungen in Verbrennungssystemen auf Experimente und andere empirische Maßnahmen angewiesen.

Ein Hybridbrenner der vorliegend maßgeblichen Art geht hervor aus der EP 0 193 838 B1 oder den ASME-Veröffentlichungen 90-JPGC/GT-4 und 94-GT-46, wobei die ASME-Veröffentlichungen auch viele Hinweise zum Betrieb des Hybridhrenners enthalten. Dieser Hybridbrenner umfaßt einen Vormischbrenner, welcher den überwiegenden Anteil der mit dem Hybridbrenner erzeugbaren Wärme liefert und in dem der Brennstoff und die zur Verbrennung bereitgestellte Luft intensiv miteinander vermischt werden, bevor die Verbrennung initiiert wird. Die Verbrennung läuft ab unter Luftüberschuß, d. h. es ist in der bereitgestellten Luft mehr Sauerstoff vorhanden, als zur vollständigen Verbrennung des Brennstoffes erforderlich ist. Dies ist im übrigen ein Kennzeichen vieler industriell wichtigen Verbrennungssysteme, insbesondere der Verbrennungssysteme in Gasturbinen. Um die unter Luftüberschuß ablaufende Verbrennung zu stabilisieren, ist in dem Hybridbrenner ein Pilotbrenner vorgesehen. Dieser Pilotbrenner ist so gestaltet, daß er unter allen denkbaren Umständen stabil arbeitet und ist insbesondere ausgebildet als Diffusionsbrenner, bei dem es keine mit wesentlichem zeitlichem Abstand vor der eigentlichen Verbrennung erfolgende Vermischung des Brennstoffes mit Luft gibt. Vielmehr dringt der Sauerstoff aus der Luft durch Diffusion in den fein verteilten Brennstoff ein, und die Entzündung des entstehenden Gemisches erfolgt ohne wesentlichen Zeitverzug. Dieser Pilotbrenner liefert nur einen untergeordneten Anteil der insgesamt zu erzeugenden Wärme und trägt somit unabhängig von seiner Ausgestaltung und Funktionsweise allenfalls teilweise zu unerwünschten Immissionen des Hybridbrenner, beispielsweise Stickoxiden, bei. Von hauptsächlicher Bedeutung ist die Tatsache, daß der Pilotbrenner die Verbrennung des aus dem Vormischbrenner austretenden Gemisches initiiert und stabilisiert und sicherstellt, daß unter allen denkbaren Betriebsbedingungen eine vollständige Verbrennung des zugeführten Brennstoffes erfolgt.

Hinweise, wie eine im Hinblick auf die Unterdrückung von Verbrennungsschwingungen oder andere Zwecke gewünschte Modulation einer von einem Brenner gelieferten Flamme erfolgen kann, und auch Hinweise zu entsprechend verwendbaren Vorrichtungen und Systemen, gehen hervor aus der EP 0 601 608 A1 sowie den nachfolgend genannten Aufsätzen: T. Poinsot et al., "Initiation and Supression of Combustion Instabilities by Active Control", 22nd International Symposium on Combustion, Seattle, USA 1988; P.J. Langhorne et al., "Practical Active Control System for Combustion Oscillations, Journal of Propulsion and Power 6 (1990), Seiten 324-333. Allen bekannten Verfahren zur Modulation einer Flamme, auch "Verfahren zur aktiven Schwingungskontroile" zu benennen, ist gemeinsam, daß diese Verfahren lediglich unter Auswertung von Versuchsergebnissen an im Labormaßstab errichteten Systemen, nicht jedoch an tatsächlichen industriellen Verbrennungssystemen, erarbeitet wurden. Eines der bekannten Verfahren sieht vor, eine akustische Welle in einer Brennkammer durch Überlagerung einer entsprechend erzeugten gegenphasigen Welle gleicher Frequenz auszulöschen, indem die Brennkammer mit geeigneten Lautsprechern beschallt wird. Ein anderes bekanntes Verfahren bedient sich einer Modulation des dem Verbrennungssystem zugeführten flüssigen oder gasförmigen Brennstoffes. Eine solche Modulation ist möglich, da eine Verbrennungsschwingung gekennzeichnet ist durch gleichzeitiges und koordiniertes Auftreten einer akustischen Schwingung und einer schwingenden Wärmefreisetzung in der Flamme. Da die Flamme die Energie zur Aufrechterhaltung der akustischen Schwingung liefert, kann durch eine geeignete Modulation des zur Flamme gelangenden Brennstoffstromes und damit der Flamme selbst die akustische Schwingung beeinflußt, insbesondere geschwächt werden.

Zur Lösung dieser Aufgabe im Hinblick auf ein Verfahren angegeben wird erfindungsgemäß ein Verfahren zur akustischen Modulation einer von einem Hybridbrenner umfassend einen Vormischbrenner und einem diesem zugehörigen Pilotbrenner durch Verbrennung eines dem Vormischbrenner in einem Hauptstrom sowie dem Pilotbrenner in einem Pilotstrom zugeführten Brennstoffes erzeugten Flamme mittels akustisch moduliertem Zuführen des Brennstoffes, wobei der Pilotstrom moduliert und der Hauptstrom nicht moduliert wird, und wobei die Flamme in einer Brennkammer erzeugt wird, in welcher akustische Schwingungen mit einer Schwingungsfrequenz herrschen, wobei ein die akustischen Schwingungen treu wiedergebendes Sensorsignal erzeugt wird, aus dem ein den Pilotstrom mit der Schwingungsfrequenz modulierendes Modulationssignal erzeugt wird, und wobei die Flamme eine negative Rückkopplung auf die akustischen Schwingungen in der Brennkammer bewirkt.

Zur Lösung der Aufgabe im Hinblick auf eine Vorrichtung angegeben wird erfindungsgemäß eine Vorrichtung zur akustischen Modulation einer von einem Hybridbrenner umfassend einen Vormischbrenner und einen diesem zugehörigen Pilotbrenner durch Verbrennung eines dem Vormischbrenner durch eine Hauptleitung und dem Pilotbrenner durch eine Pilotleitung zugeführten Brennstoffes erzeugten Flamme mittel akustisch moduliertem Zuführen des Brennstoffes, wobei ein Modulator in die Pilotleitung eingefügt ist, mit welchem ein durch die Pilotleitung der Flamme zugeführter Pilotstrom des Brennstoffes modulierbar ist, und wobei der Hybridbrenner an eine Brennkammer angeschlossen ist, so daß die Flamme in der Brennkammer erzeugt wird, wobei ein Sensor zur Erzeugung eines akustische Schwingungen mit einer Schwingungsfrequenz in der Brennkammer treu wiedergebenden Sensorsignals an die Brennkammer angeschlossen ist, wobei der Sensor zur Übertragung des Sensorsignals mit einer Modulationseinrichtung verbunden ist, durch welche aus dem Sensorsignal ein Modulationssignal mit der Schwingungsfrequenz erzeugbar ist, zu dessen Übertragung die Modulationseinrichtung mit dem Modulator verbunden ist.

Es versteht sich, daß die Erfindung nicht auf die Verwendung eines einzigen Sensors und die Verarbeitung eines einzigen Sensorsignals beschränkt ist; es kann wünschenswert und vorteilhaft sein, zur Abbildung akustischer Schwingungen mehrere Sensoren zu verwenden, die durchaus verschiedenartig voneinander sein können. Von Bedeutung im Hinblick auf das Sensorsignal ist allein, daß ein treues Abbild der akustischen Schwingungen erzeugt wird, also ein unter Umständen mehrdimensionales Sensorsignal, welches einen eindeutigen Rückschluß auf die akustischen Schwingungen in der Brennkammer erlaubt. Das Modulationssignal muß nicht notwendigerweise verschieden von dem Sensorsignal sein, doch sollte im allgemeinen davon ausgegangen werden, daß sowohl der Sensor als auch der Modulator hinsichtlich der abgegebenen bzw. zugeführten Signale gewisse Charakteristiken aufweisen, die in irgendeiner Weise aneinander angepaßt werden müssen.

Vorzugsweise gehört der Hybridbrenner zu einer Anordnung aus mehreren, gleichartigen Hybridbrennern, wobei alle Hybridbrenner an eine einzige Brennkammer angeschlossen sind, wobei jeder Hybridbrenner einen Pilotbrenner mit zugehöriger Pilotleitung aufweist und wobei in jede Pilotleitung ein zugehöriger Modulator eingefügt ist. Diese Weiterbildung erschließt die Anwendung der Erfindung in einer Gasturbine, in der gemäß einschlägiger Praxis jeweils mehrere Hybridbrenner an einer Brennkammer vorgesehen sind. Die Brennkammer kann wahlweise eine einzige, insbesondere als kreisringförmige Ringbrennkammer ausgebildete, Brennkammer sein, es können auch mehrere parallel arbeitende Brennkammern an einer Gasturbine vorgesehen sein. Letzteres ist insbesondere der Fall, wenn die Brennkammern sogenannte Silobrennkammern sind.

Ausführungsbeispiele der Erfindung werden nunmehr anhand der Zeichnung erläutert. Zur Herausstellung gewisser Merkmale ist die Zeichnung in schematisierter Form ausgeführt. Hinweise zur konkreten Realisierung der dargestellten Ausführungsformen stehen einer einschlägig bewanderten und tätigen Person im Rahmen ihres Fachwissens zu Gebote; ergänzend ist zu verweisen auf die einschlägigen Hinweise in den zitierten Dokumenten des Standes der Technik. Im einzelnen zeigen:
- FIG 1: eine Gasturbine mit einer Vorrichtung zur Unterdrückung von Verbrennungsschwingungen; und
- FIG 2: eine Teilansicht einer Brennkammer mit mehreren Hybridbrennern sowie einer Vorrichtung zur Modulation der von den Hybridbrennern erzeugten Flammen.

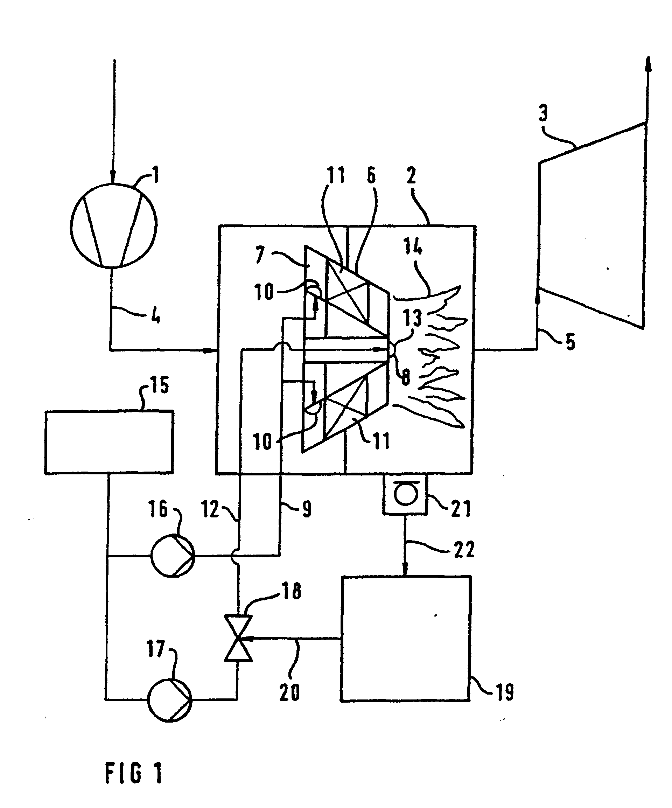

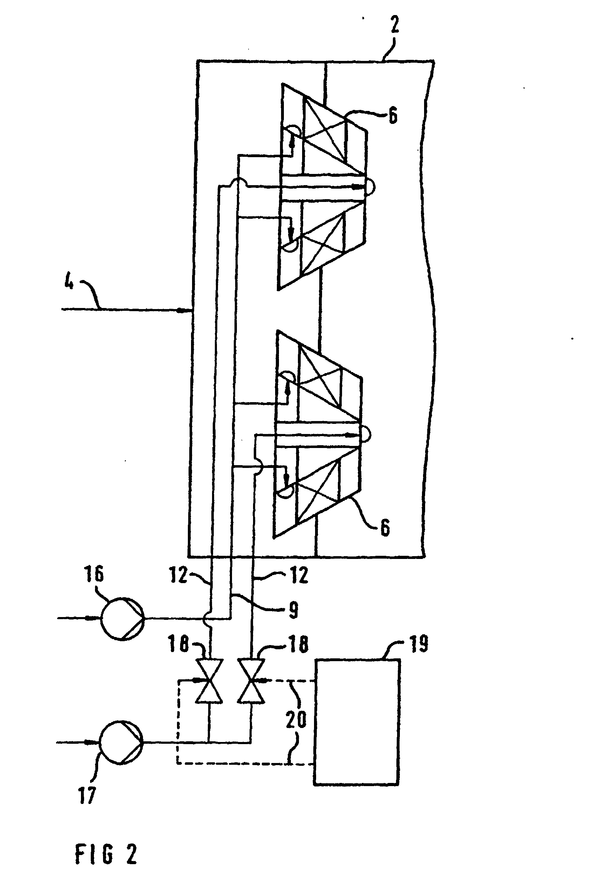

Die in der Zeichnung dargestellten Anlagen haben viele Gemeinsamkeiten, wobei sich die Bedeutung vieler Merkmale der FIG 2 bereits aus der Erläuterung der FIG 1 ergibt. Aus diesem Grunde tragen einander entsprechende Merkmale der Figuren jeweils dasselbe Bezugszeichen.

FIG 1 zeigt eine Gasturbine, umfassend einen Verdichter 1, eine Brennkammer 2 (die, wie erläutert, eine von mehreren sein kann), und eine Turbine 3. Der Verdichter 1 stellt einen Luftstrom 4 aus komprimierter Luft bereit, und dieser gelangt zur Brennkammer 2. In der Brennkammer 2 wird in dem Luftstrom 4 ein Brennstoff verbrannt und es entsteht Rauchgas, welches als Rauchgasstrom 5 der Turbine 3 zugeleitet und in dieser entspannt wird. Zur Verbrennung des Brennstoffes vorgesehen ist ein Hybridbrenner 6, umfassend einen ringförmigen Vormischbrenner 7, welcher einen Pilotbrenner 8 umringt. Eine Hauptleitung 9 dient der Zuführung eines Hauptstroms des Brennstoffes zu dem Vormischbrenner 7; der Brennstoff wird durch Düsen 10 dem den Vormischbrenner 7 durchströmenden Teil des Luftstromes 4 beigemischt. Um eine möglichst homogene Mischung zu erzielen und um zu verhindern, daß es zur Zündung des Brennstoffes unmittelbar an den Düsen 10 (Flammenrückschlag) kommt, ist ein Drallgitter 11 vorgesehen, welches den Teil des Luftstroms 4 verwirbelt. Die Verbrennung des Brennstoffes kann erst abströmseitig des Drallgitters 11 einsetzen. Eine Pilotleitung 12 dient der Zuführung eines Pilotstroms des Brennstoffes zu dem Pilotbrenner 8, wo der Brennstoff an einer Düse 13 in den Luftstrom 4 austreten kann. Der Pilotbrenner 8 ist nicht als Vormischbrenner, sondern als Diffussionsbrenner gestaltet. Er verbrennt nur einen untergeordneten Teil des Brennstoffes mit dem Ziel, die Verbrennung des dem Vormischbrenner 7 zugeführten Brennstoffes zu stabilisieren. Der Hybridbrenner 6 verbrennt den Brennstoff in einer in die Brennkammer 2 hineinragenden Flamme 14.

Der Brennstoff wird in einem Tank 15 bereitgestellt und mittels einer Hauptpumpe 16 in die Hauptleitung 9 bzw. einer Pilotpumpe 17 in die Pilotleitung 12 gepumpt. Um eine gewünschte Modulation der Flamme 14 zu erreichen, ist in die Pilotleitung 12, und nur in diese, ein Modulator 18, dargestellt als Regelventil, eingefugt. Mittels des Modulators 18 kann der Pilotstrom des Brennstoffes grundsätzlich in jeder gewünschten Weise moduliert werden. Von besonderer Bedeutung ist eine solche Modulation, um die Flamme 14 zu modulieren. Der Modulator 18 wird gesteuert von einer Modulationseinrichtung 19, die mit dem Modulator 18 über eine Modulationssignalleitung 20 verbunden ist. Auf die vorstehenden Hinweise zur Ausgestaltung des Modulators 18, der Modulationseinrichtung 19 und der Modulationssignalleitung 20 wird hiermit verwiesen. Die Modulation des Pilotstromes ist von besonderer Bedeutung, um in der Brennkammer 2 möglicherweise auftretende Verbrennungsschwingungen zu vermeiden. Zu diesem Zwecke ist an der Brennkammer 2 ein Sensor 21, skizziert als Mikrofon, angebracht, und dieser Sensor 21 ist mit der Modulationseinrichtung 19 über eine Sensorsignalleitung 22 verbunden. Die Modulationseinrichtung 19 wandelt ein über die Sensorsignalleitung 22 erhaltenes Sensorsignal um in ein Modulationssignal, welches durch die Modulationssignalleitung 20 zum Modulator 18 gelangt. Durch geeignete Verarbeitung des Sensorsignals in der Modulationseinrichtung 19 kann erreicht werden, daß über die Modulation der Flamme 14 eine negative Rückkopplung auf die akustischen Schwingungen in der Brennkammer 2 bewirkt wird. Durch geeignete Auslegung dieser negativen Rückkopplung sind Verbrennungsschwingungen in der Brennkammer 2 sicher vermeidbar.

Es sei darauf hingewiesen, daß die in FIG 1 dargestellte Einrichtung zur Modulation der Flamme 14 die Realisierung weiterer Maßnahmen an der Brennkammer 2, welche sich auf die Unterdrückung von Verbrennungsschwingungen darin beziehen, keineswegs ausschließt. Von Interesse kann es z.B. sein, daß die Brennkammer 2 und alle mit dieser verbundenen Komponenten so ausgelegt werden, daß Verbrennungsschwingungen jedenfalls dann ausgeschlossen sind, wenn die Brennkammer 2 unter Erzeugung der maximal vorgesehenen thermischen Leistung arbeitet. Eine solche Auslegung schließt nicht aus, daß Verbrennungsschwingungen auftreten, wenn in der Brennkammer weniger als die maximal vorgesehene thermische Leistung erzeugt wird. Dann kann die in FIG 1 vorgestellte Vorrichtung zur Unterdrückung von Verbrennungsschwingungen eingesetzt werden, um die Verbrennungsschwingungen wirkungsvoll zu vermindern oder ganz zu unterdrücken. Von Vorteil dabei ist, daß der Modulator 18 dabei nicht dauernd beansprucht wird, was seinen Verschleiß wirkungsvoll vermindert.

FIG 2 zeigt eine Brennkammer 2 mit Hybridbrennern 6, die hinsichtlich ihres Aufbaus mit dem Hybridbrenner aus FIG 1 im wesentlichen übereinstimmen. Ihr Aufbau wird daher nicht nochmals detailliert erläutert. Der Brennkammer 2 wird ebenfalls ein Luftstrom 4 zugeführt, welcher in den Hybridbrennern 6 mit Brennstoff versetzt wird, welcher in der Brennkammer 2 verbrannt wird. Zur Zuführung des Brennstoffes zu den Vormischbrennern 7 vorgesehen ist eine einzige Hauptleitung 9, die sich an den Hybridbrennern 6 entsprechend verzweigt. Hingegen ist für jeden Hybridbrenner 6 eine eigene Pilotleitung 12 vorgesehen, wobei in jede Pilotleitung 12 ein zugehöriger Modulator 18 eingefügt ist. Stromaufwärts der Modulatoren 18 sind die Pilotleitungen 12 zusammengeführt und werden aus einer einzigen Pilotpumpe 17 mit Brennstoff gespeist. Jeder Modulator 18 ist über eine zugehörige Modulationssignalleitung 20 mit der Modulationseinrichtung 19 verbunden. Die Ansteuerung der Modulatoren 18 muß nicht notwendigerweise im Gleichtakt erfolgen; es ist möglich und unter Umständen vorteilhaft, jedem Modulator 18 ein besonderes Modulationssignal zuzuführen, welches von dem dem anderen Modulator 18 zugeführten Modulationssignal abweicht. Dies ist von besonderem Interesse dann, wenn sich in der Brennkammer 2 Verbrennungsschwingungen in Form von stehenden Wellen ausbilden, die an den Orten der Hybridbrenner 6 unterschiedliche Amplituden aufweisen und welche von den Hybridbrennern 6 auf unterschiedliche Weise beeinflußt werden. In diesem Zusammenhang kann es vorteilhaft sein, auch mehrere Sensoren 21 zu verwenden und die von diesen abgegebenen Sensorsignale entsprechend differenziert auszuwerten.
Daß gemäß FIG 2 nur eine einzige Hauptpumpe 16 und eine einzige Pilotpumpe 17 zum Einsatz kommen, ist keineswegs zwingend und nur der Übersicht halber so dargestellt. Es ist möglich, für jeden Hybridbrenner 6 besondere Pumpen 16 und 17 vorzusehen; es ist auch möglich, alle Vormischbrenner 7 und alle Pilotbrenner 8 aus einer einzigen Pumpe mit Brennstoff zu versorgen. Unter diesen Umständen ist selbstverständlich durch das Vorsehen von Drosseln dafür Sorge zu tragen, daß der Brennstoff in gewünschter Weise auf die verschiedenen Brenner verteilt wird.

Die beschriebenen Ausführungsbeispiele sind ausgelegt zur Verwendung eines flüssigen Brennstoffs. Damit ist jedoch keine kritische Äußerung hinsichtlich der Verwendung von gasförmigem Brennstoff im Zusammenhang mit der Erfindung verbunden; vielmehr sollen diejenigen Elemente der Ausführungsbeispiele, die speziell auf die Förderung flüssigen Brennstoffs abgestimmt sein müssen, angesehen werden als Symbole für analoge Elemente zur Förderung gasförmigen Brennstoffs: Pumpen für Gebläse, der Aktuator für Flüssigkeit für einen Aktuator für Gas, der Tank für einen Gasspeicher oder ein Gasversorgungsnetz, etc.

Die Erfindung betrifft ein Verfahren und eine Vorrichtung zur akustischen Modulation einer von einem Hybridbrenner erzeugten Flamme, welche einen für solche Hybridbrenner beobachteten Verstärkungseffekt ausnutzen, welcher darin besteht, daß sich Variationen beim Betrieb des zugehörigen Pilotbrenners überproportional auf den Betrieb des zugehörigen Vormischbrenners auswirken. Daher kann eine gewünschte Modulation der Flamme erreicht werden, indem lediglich ein untergeordneter Teil des dem Hybridbrenner insgesamt zugeführten Brennstoffs entsprechend moduliert zugeführt wird.

## Patentansprüche

1. Verfahren zur akustischen Modulation einer von einem Hybridbrenner (6) umfassend einen Vormischbrenner (7) und einem diesem zugehörigen Pilotbrenner (8) durch Verbrennung eines dem Vormischbrenner (7) in einem Hauptstrom sowie dem Pilotbrenner (8) in einem Pilotstrom zugeführten Brennstoffes erzeugten Flamme (14) mittels akustisch moduliertem Zuführen des Brennstoffes, wobei der Pilotstrom moduliert und der Hauptstrom nicht moduliert wird, und wobei die Flamme (14) in einer Brennkammer (2) erzeugt wird, in welcher akustische Schwingungen mit einer Schwingungsfrequenz herrschen, wobei ein die akustischen Schwingungen treu wiedergebendes Sensorsignal erzeugt wird, aus dem ein den Pilotstrom mit der Schwingungsfrequenz modulierendes Modulationssignal erzeugt wird, und wobei die Flamme (14) eine negative Rückkopplung auf die akustischen Schwingungen in der Brennkammer (2) bewirkt.

2. Verfahren nach Anspruch 1, bei dem der Hybridbrenner (6) ein Rauchgas erzeugt, welches einer Turbine (3) zugeführt und in dieser entspannt wird.

3. Vorrichtung zur akustischen Modulation einer von einem Hybridbrenner (6) umfassend einen Vormischbrenner (7) und einen diesem zugehörigen Pilotbrenner (8) durch Verbrennung eines dem Vormischbrenner (7) durch eine Hauptleitung (9) und dem Pilotbrenner (8) durch eine Pilotleitung (12) zugeführten Brennstoffes erzeugten Flamme (14) mittel akustisch moduliertem Zuführen des Brennstoffes, wobei ein Modulator (18) nur in die Pilotleitung (12) aber nicht in die Hauptleitung eingefügt ist, mit welchem ein durch die Pilotleitung (12) der Flamme (14) zugeführter Pilotstrom des Brennstoffes modulierbar ist, und wobei der Hybridbrenner (6) an eine Brennkammer (2) angeschlossen ist, so daß die Flamme (14) in der Brennkammer (2) erzeugt wird, wobei ein Sensor (21) zur Erzeugung eines akustische Schwingungen mit einer Schwingungsfrequenz in der Brennkammer (2) treu wiedergebenden Sensorsignals an die Brennkammer (2) angeschlossen ist, wobei der Sensor (21) zur Übertragung des Sensorsignals mit einer Modulationseinrichtung (19) verbunden ist, durch welche aus dem Sensorsignal ein Modulationssignal mit der Schwingungsfrequenz erzeugbar ist, zu dessen Übertragung die Modulationseinrichtung (19) mit dem Modulator (18) verbunden ist.

4. Vorrichtung nach Anspruch 3, bei der die Modulationseinrichtung (19) einstellbar ist zur Bewirkung einer negativen Rückkopplung auf die akustischen Schwingungen in der Brennkammer (2).

5. Vorrichtung nach einem der Ansprüche 3 bis 4, bei der der Hybridbrenner (6) zu einer Anordnung aus mehreren, gleichartigen Hybridbrennern (6) gehört, welche Hybridbrenner (6) an eine einzige Brennkammer (2) angeschlossen sind, wobei jeder Hybridbrenner (6) einen Pilotbrenner (8) mit zugehöriger Pilotleitung (12) aufweist und in jede Pilotleitung (12) ein zugehöriger Modulator (18) eingefügt ist.

6. Vorrichtung nach einem der Ansprüche 3 bis 5, welche einem Hybridbrenner (6) in einer Gasturbine (1, 2, 3) zugeordnet ist.

## Claims

1. Method of acoustic modulation of a flame (14) by means of acoustically modulated feeding of a fuel, said flame being produced by a hybrid burner (6) comprising a premixing burner (7) and a pilot burner (8), associated with the latter, by burning a fuel which is fed to the premixing burner (7) in a main flow and to the pilot burner (8) in a pilot flow, in which the pilot flow is modulated and the main flow is not modulated, and in which the flame (14) is produced in a combustion chamber (2) in which acoustic oscillations having an oscillation frequency prevail, a sensor signal truly reproducing the acoustic oscillations being generated, from which a modulation signal modulating the pilot flow with the oscillation frequency is generated, and in which the flame (14) effects negative feedback to the acoustic oscillations in the combustion chamber (2).

2. Method according to Claim 1, in which the hybrid burner (6) produces a smoke gas which is fed to a turbine (3) and is expanded therein.

3. Device for acoustic modulation of a flame (14) by means of acoustically modulated feeding of the fuel, said flame being produced by a hybrid burner (6) comprising a premixing burner (7) and a pilot burner (8), associated with the latter, by burning a fuel, which is fed to the premixing burner (7) through a main line (9) and to the pilot burner (8) through a pilot line (12), in which there is inserted only in the pilot line (12) but not in the main line a modulator (18) by means of which it is possible to modulate a pilot flow of the fuel which is fed to the flame (14) through the pilot line (12), and in which the hybrid burner (6) is connected to a combustion chamber (2) so that the flame (14) is produced in the combustion chamber (2), in which a sensor (21) for generating a sensor signal truly reproducing acoustic oscillations having an oscillation frequency in the combustion chamber (2) is connected to the combustion chamber (2), the sensor (21) being connected for the purpose of transmitting the sensor signal to a modulation device (19) by means of which it is possible to generate from the sensor signal a modulation signal with the oscillation frequency, for the purpose of transmitting which the modulation device (19) is connected to the modulator (18).

4. Device according to Claim 3, in which the modulation device (19) can be set to effect negative feedback to the acoustic oscillations in the combustion chamber (2).

5. Device according to one of Claims 3 to 4, in which the hybrid burner (6) belongs to an arrangement composed of a plurality of similar hybrid burners (6), which hybrid burners (6) are connected to a single combustion chamber (2), each hybrid burner (6) having a pilot burner (8) with an associated pilot line (12), and an associated modulator (18) being inserted in each pilot line (12).

6. Device according to one of Claims 3 to 5, which is assigned to a hybrid burner (6) in a gas turbine (1, 2, 3).

## Revendications

1. Procédé de modulation acoustique d'une flamme (14) produite par un brûleur (6) hybride comprenant un brûleur (7) à prémélange et un brûleur (8) pilote associé à celui-ci, par combustion d'un combustible apporté au brûleur (7) à prémélange suivant un courant principal, ainsi qu'au brûleur (8) pilote suivant un courant pilote, au moyen d'un apport modulé acoustiquement du combustible, le courant pilote étant modulé et le courant principal n'étant pas modulé et la flamme (14) étant produite dans une chambre (2) de combustion dans laquelle règnent des oscillations acoustiques ayant une fréquence d'oscillation, dans lequel on produit un signal de capteur reproduisant fidèlement les oscillations acoustiques, on produit à partir de ce signal un signal de modulation modulant le courant pilote à la fréquence d'oscillation, et dans lequel la flamme (14) provoque une réaction négative sur les oscillations acoustiques dans la chambre (2) de combustion.

2. Procédé suivant la revendication 1, dans lequel le brûleur (6) hybride produit un gaz de fumée qui est envoyé à une turbine (3) et qui y est détendu.

3. Dispositif de modulation acoustique de flamme (14) produite par un brûleur (6) hybride comprenant un brûleur (7) à prémélange et un brûleur (8) pilote qui lui est associé, par combustion d'un combustible apporté au brûleur (7) à prémélange par un conduit (9) principal et au brûleur (8) pilote par un conduit (12) pilote, au moyen d'un apport modulé acoustiquement du combustible, un modulateur (18) étant inséré seulement dans le conduit (12) pilote mais non dans le conduit principal, modulateur par lequel un courant pilote du combustible qui est apporté à la flamme (14) par le conduit (12) pilote peut être modulé et dans lequel le brûleur (6) hybride est raccordé à une chambre (2) de combustion de façon à produire la flamme (14) dans la chambre (2) de combustion, un capteur (21) de production d'un signal de capteur reproduisant fidèlement des oscillations acoustiques ayant une fréquence d'oscillation dans la chambre (2) de combustion étant raccordé à la chambre (2) de combustion, le capteur (21) étant pour la transmission du signal de capteur relié à un dispositif (19) de modulation par lequel il peut être produit à partir du signal du capteur un signal de modulation ayant la fréquence d'oscillation pour la transmission duquel le dispositif (19) de modulation est relié au modulateur (18).

4. Dispositif suivant la revendication 3, dans lequel le dispositif (19) de modulation peut être réglé pour provoquer une réaction négative sur les oscillations acoustiques dans la chambre (2) de combustion.

5. Dispositif suivant l'une des revendications 3 à 4, dans lequel le brûleur (6) hybride fait partie d'un dispositif constitué de plusieurs brûleurs (6) hybrides de même type, ces brûleurs (6) hybrides étant raccordés à une chambre (2) de combustion unique, chaque brûleur (6) hybride ayant un brûleur (8) pilote à conduit (12) pilote associé, et il est inséré dans chaque conduit (12) pilote un modulateur (18) associé.

6. Dispositif suivant l'une des revendications 3 à 5, qui est associé à un brûleur (6) hybride dans une turbine (1, 2, 3) à gaz.
